# EUROPEAN PATENT SPECIFICATION

(11) **EP 3 529 133 B1**
(45) Date of publication and mention of the grant of the patent: **23.06.2021**
(21) Application number: 17861794.0
(22) Date of filing: 19.10.2017
(51) Int. Cl.: C09J 5/06, B62D 65/06, B60J 1/00

(54) **VARIABLE RATIO ADHESIVE APPLICATION**
KLEBSTOFFANWENDUNG MIT VARIABLEM VERHÄLTNIS
APPLICATION D'ADHÉSIF À PROPORTIONS VARIABLES

(30) Priority: 19.10.2016 US 201662410125 P
(43) Date of publication of application: 28.08.2019
(73) Proprietor: Magna Exteriors Inc., Concord, Ontario L4K 4J5 (CA)
(72) Inventor: HUOTARI, Keijo, Fenton, MI 48430 (US); KARPINSKI, Mike, Blissfield, MI 49228 (US)
(74) Representative: Glawe, Delfs, Moll
(86) International application number: PCT/IB2017/001441
(87) International publication number: WO 2018/073647

(56) References cited:
- EP-B1- 1 403 108
- CA-A- 1 245 248
- JP-A- 2007 216 880
- JP-A- 2017 100 511
- US-A- 4 933 032
- US-A- 5 064 494
- US-B1- 6 926 949
- US-B2- 8 668 989

## Description

### FIELD OF THE INVENTION

The present invention relates to an adhesive application for a window for a vehicle.

### BACKGROUND OF THE INVENTION

In manufacturing generally and in the area of vehicle window installation adhesives are typically used to connect the windows, such as windshields, rear windows and other non-movable windows to the vehicle body. Adhesives dispensing during the manufacturing process is typically accomplished using a one (1) component or two (2) component adhesive system. When a one (1) component, such a windshield adhesive is used, it is a slow curing adhesive requiring moisture to cure. Full cure can take up to 7 days. During this time period secondary attachments are then used such as locking pins, and dual lock (Velcro). These secondary attachments require either an additional piece, additional steps or additional material to be used. These secondary attachments also require additional tooling and manufacturing space to be accommodated. Some of the one (1) component adhesives can be accelerated by a booster being added but this is also expensive and creates less than ideal results. Where two (2) component adhesives are used, the process provides the advantage of faster curing time, however it is more expensive.

The present invention seeks to modify the one component adhesive system creating a hybrid system that selectively uses a booster component as a booster, which eliminates the need for secondary fastener, maintaining cost effective final solution. The present invention also seeks to provide a hybrid single component system where an adhesive booster is used selectively at strategic locations in order to eliminate the need for secondary attachment structures.

US 8,668,989 B2 discloses a sliding window assembly for a vehicle including a frameless fixed portion having first and second glass window portions and including a sliding portion having a glass window panel. A window panel has a perimeter gasket bonded to a glass substrate. The gasket is attached via a layer of adhesive and may contain one or more fasteners for attachment to a vehicle mounting surface. The glass panel is entirely frameless.

US 8,668,989 B2 further discloses the use of a layer of two component urethane adhesive.

### SUMMARY OF THE INVENTION

According to the invention, a process for adhering a window to a frame with the features of claims 1 and 2, respectively, is proposed.

A process for adhering a window to a frame includes several steps. A first step of the process includes providing a frame for a window having a peripheral surface for contacting an outer peripheral surface of a window. The peripheral surface and the outer peripheral surface have two or more mating corners. Next the process includes applying a bead of single component curable adhesive at least partially around the peripheral surface or on the outer peripheral surface of the window such that the bead of single component curable adhesive is positioned between the peripheral surface and the outer peripheral surface. The step of applying the bead of single component curable adhesive further includes applying to at least two or more preselectable areas, at the two or more mating corners, a boosting agent added to the single component curable adhesive for securely holding the window in place upon assembly of the window onto the frame.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Fig. 1 is a plan front view of a vehicle lift gate having a frame opening with a rear glass being adhesively bonded to the frame opening using the curable adhesive and boosting agent in accordance with the present invention.
Fig. 2 is a plan front view of a vehicle windshield having a frame opening with a front glass being adhesively bonded to the frame opening using the curable adhesive and boosting agent in accordance with the present invention.

### DETAILED DESCRIPTION OF THE PREFERRED EMBODIMENTS

The following description of the preferred embodiment(s) is merely exemplary in nature and is in no way intended to limit the invention, its application, or uses

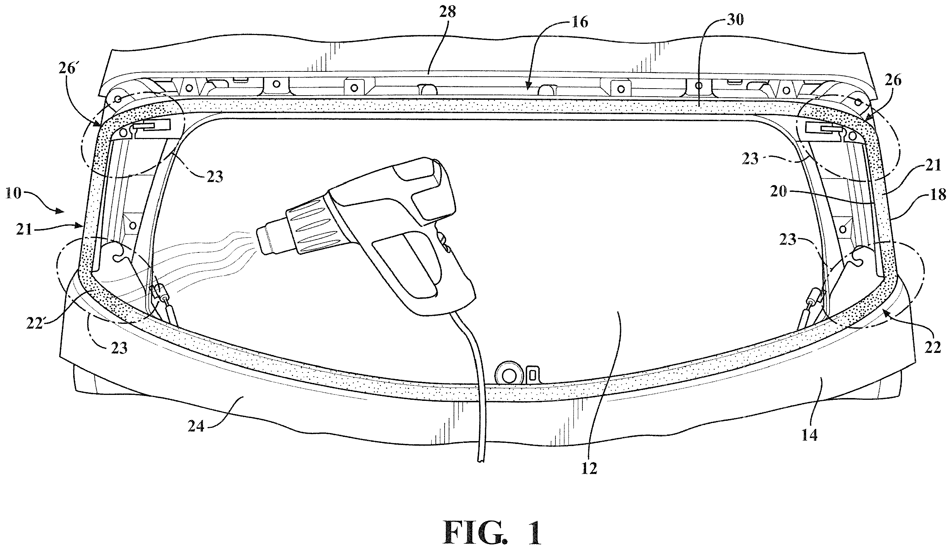

Figure 1 shows a process for adhering a window glass to a vehicle body. In particular FIG 1 shows a rear lift gate 10 having a rear glass 12 connected or placed on to a lift gate 14 across an opening defined by an inner peripheral surface 20 on a frame 16 of the lift gate 14. The frame 16 of the lift gate 14 also has with an outer peripheral surface 18. While a lift gate 14 is shown and described it is within the scope of this invention for the process to be implemented on other vehicle body panel such as doors, windshields, etc. The outer peripheral surface 18 is configured to contact with glass of the window 12. As shown in FIG 1 the outer peripheral surface 18 and inner peripheral surface 20 have a have two or more mating corners generally indicated at 23 where there are two top corners 26, 26' and two bottom corners 22, 22'. The bottom corners 22, 22' are located adjacent a lower portion 24 of the lift gate 14, while the top corners 26, 26' are located adjacent or near an upper frame 28 of the lift gate 14. The mating corners 23 are contact surfaces between the flange 21 outer peripheral surface 18 and inner peripheral surface 20, wherein curing an adhesive in the region of the corners quickly will help to hold the window 12 in place while the remaining adhesive can cure at a much slower rate. This is described in greater detail below.

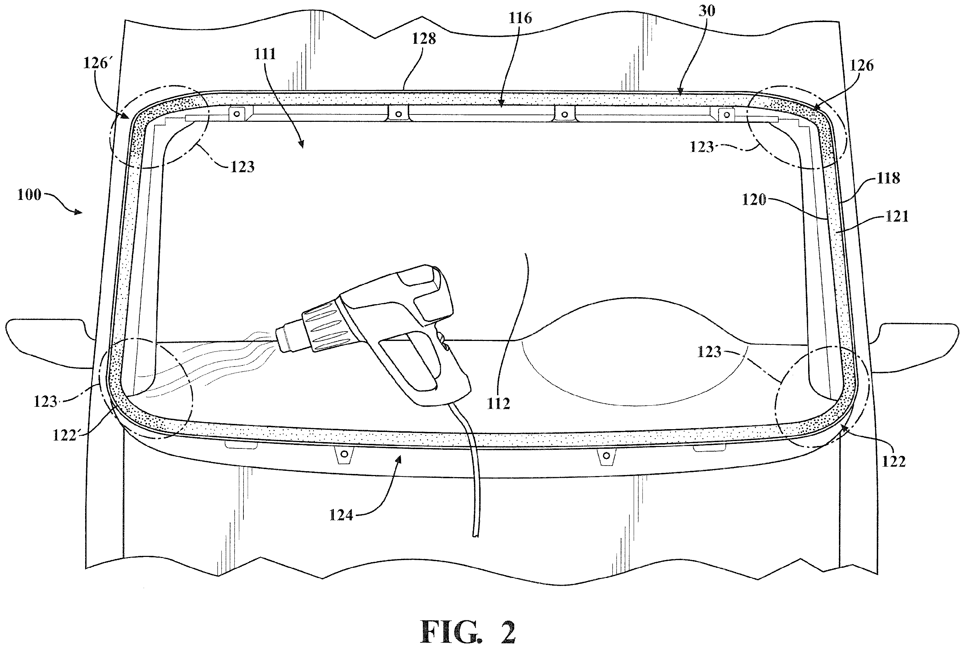

In Fig. 1 the window 12 is a rear window for a vehicle lift gate 14. It is within the scope of this invention for the window to be some other type of automotive window such as a windshield or side window. Fig. 2 shows a front windshield 100 having a frame 116 defining an opening 111 that is covered by a window 112. The frame 116 of the windshield 100 also has with an outer peripheral surface 118 and inner peripheral surface 120 with a flange 121 there between that extends generally around the opening 111 of the windshield. The flange 121 has two or more mating corners 123 where there are two top corners 126, 126' and two bottom corners 122, 122'. The bottom corners 122, 122' are located adjacent a lower portion 124 of the windshield 100, while the top corners 126, 126' are located adjacent or near an upper frame 128 of the windshield 100. The mating corners 123 are contact surfaces on the flange 121 between the outer peripheral surface 118 and inner peripheral surface 120, wherein curing an adhesive in the region of the corners quickly will help to hold the window 112 in place while the remaining adhesive can cure at a much slower rate.

Next the process includes applying a bead of curable adhesive 30 at least partially around the flange 21, 121 or the outer peripheral surface of the window 12, 112 such that the bead of curable adhesive 30 is positioned between the inner peripheral surface 16, 116 in the outer peripheral surface 20, 120. The bead of curable adhesive 30 is a single component adhesive. The step of applying adhesive also includes two or more preselectable areas located in the region of two or more the mating corners 122, 122', 126, 126' receiving a boosting agent added to the bead of curable adhesive 30. The boosting agent speeds up the curing process at the preselected areas in order to cause the window 12, 112 to more quickly bond to the lift gate 14 or windshield 100 at the locations of the at least two of the four corners. This allows the window 12, 112 to stay in place and not slide off well the remainder of the bead of curable adhesive 30 cures over several days. Applying the booster agent to a preselected area also cuts down on cost since only a small amount of boosting agent is being used and a single component adhesive can still be used, which also saves costs over a two component system.

Once the boosting agent has been applied at the preselected areas a localized heat source, such as an infrared heat lamp or heat gun is applied to the bead of adhesive where the booster has been applied. The heat source a localized temperature of at least 60°C, with a preferred range of 60°C to 80°C in order to speed up the curing process at the two or more preselected areas.

In one embodiment of the invention, the type of adhesive used as an isocyanate urethane adhesive with a polyester polyol booster. Examples of specific adhesives include, but are not limited to Yokohama WS202FK with B1M booster and or WS242FK with AN-1 booster manufactured by Yokohama America Inc., 103 Kuhlman Blvd. Versailles, KY 40383. Another exemplary adhesive and booster is Sikaflex®-271 + 2% Sika® Booster 20W manufactured by Sika Corporation, 201 Polito Ave., Lyndhurst, NJ 07071.

However it is within the scope of this invention for the booster to be any compound containing a reactive hydrogen. Specific boosters includes compounds containing alcohols, amines or metal based boosters including metals such as tin bismuth and zinc. Specific example of metal based boosters include but are not limited to dibutyl tin dilaurate, mecaptides including a water-soluble, organotin catalyst, water-soluble bisbuth based catalysts and a zine based catalysts.

The description of the invention is merely exemplary in nature and, thus, variations that do not depart from the
scope of the claims are intended to be within the scope of the invention.

## Claims

1. A process for adhering a window (12) to a frame (16) comprising the steps of:
providing a frame (16) for the window (12) having an inner peripheral surface (20) defining an opening in the frame (16) and an outer peripheral surface (18) of the frame (16), wherein the inner peripheral surface (20) and the outer peripheral surface (18) have two or more mating corners (23);
providing a single component curable adhesive;
applying a bead of single component curable adhesive (30) at least partially around the opening in the frame (16) on a flange (21) between the inner peripheral surface (20) and the outer peripheral surface (18), wherein applying the bead of single component curable adhesive (30) further includes applying to at least two or more preselected areas located at the two or more mating corners (23) a boosting agent that is added to the single component curable adhesive (30) for securely holding the window (12) in place upon assembly of the window (12) into the frame (16);
providing the window (12) having an edge;
placing the window (12) on the frame (16) such that a portion of an inside surface of the window (12) extends over the flange (21) and the edge aligns with the outer peripheral surface (18) of the frame (16) wherein the bead of single component curable adhesive (30) and the boosting agent is positioned between an inside surface of the window (12) and the flange (21) of the frame (16).

2. A process for adhering a window (12) to a frame (16) comprising the steps of:
providing a frame (16) for the window (12) having an inner peripheral surface (20) defining an opening in the frame (16) and an outer peripheral surface (18) of the frame (20), wherein the inner peripheral surface (20) and the outer peripheral surface (18) have two or more mating corners (23);
providing a single component curable adhesive (30) and a boosting agent;
mixing the single component curable adhesive (30) with the boosting agent:
applying a bead of the single component curable adhesive (30) and boosting agent at least partially around the opening in the frame (16) on a flange (21) between the inner peripheral surface (20) and the outer peripheral surface (18), wherein applying the bead of single component curable adhesive (30) and boosting agent further includes applying to at least two or more preselected areas located at the two or more mating corners (23) for securely holding the window (12) in place upon assembly of the window (12) into the frame (16);
providing the window (12) having an edge;
placing the window (12) on the frame (16) such that a portion of an inside surface of the window (12) extends over the flange (21) and the edge aligns with the outer peripheral surface (18) of the frame (16) wherein the bead of single component curable adhesive (30) and the boosting agent is positioned between an inside surface of the window (12) and the flange (21 of the frame (16).

3. The process of claim 1 or 2, further comprising assembling the window (12) into the frame (16) and the window (12) is held in the frame (16) at the pre-selected areas during the curing of the single component curable adhesive (30).

4. The process of claim 3, wherein the bead of single component curable adhesive (30) is applied over the entire flange (21) of the frame (16) or the portion of the inside surface of the window (12) that overlaps the flange (21) of the frame (16).

5. The process of claim 4, wherein the boosting agent is applied to at least two areas around the flange (21) of the frame (16) or the portion of the inside surface of the window (12) that overlaps the flange (21) of the frame (16).

6. The process of claim 5, wherein the window (12) is a windshield.

7. The process of claim 5, where the single component curable adhesive (30) is a water curable adhesive.

8. The process of claim 3, further comprising applying an infrared heat source locally to the two or more mating corners (23) to accelerate the curing process.

9. The process of claim 1 or 2, wherein the two or more corners (23) include two top corners (26, 26') located at the top of the peripheral surface of the frame (16) and two bottom corners (22, 22') located at the bottom of the peripheral surface of the frame (16), wherein the two or more preselected areas are the two bottom corners (22, 22').

10. The process of claim 1 or 2, wherein the curable adhesive (30) is an isocyanate urethane adhesive and the boosting agent is a polyester polyol booster.

11. The process of claim 1 or 2, wherein the boosting agent consists essentially of one selected from the group comprising polyester polyol booster, dibutyl tin dilaurate, mecaptides including a water-soluble, organotin catalyst, water-soluble bismuth based catalysts and a zinc based catalysts.

## Patentansprüche

1. Verfahren zum Verkleben eines Fensters (12) mit einem Rahmen (16) mit den Schritten:
Bereitstellen eines Rahmens (16) für das Fenster (12) mit einer inneren Umfangsfläche (20), die eine Öffnung in dem Rahmen (16) definiert, und einer äußeren Umfangsfläche (18) des Rahmens (16), wobei die innere Umfangsfläche (20) und die äußere Umfangsfläche (18) zwei oder mehr zusammenpassende Ecken (23) aufweisen,
Bereitstellung eines einkomponentigen härtbaren Klebstoffs,
Auftragen einer Raupe aus dem einkomponentigen härtbarem Klebstoff (30) zumindest teilweise um die Öffnung im Rahmen (16) herum auf einen Flansch (21) zwischen der inneren Umfangsfläche (20) und der äußeren Umfangsfläche (18), wobei das Auftragen der Raupe aus einkomponentigem härtbarem Klebstoff (30) ferner das Auftragen eines Verstärkungsmittels, das dem einkomponentigen härtbaren Klebstoff (30) zum sicheren Halten des Fensters (12) an Ort und Stelle bei der Montage des Fensters (12) in den Rahmen (16) hinzugefügt wird, auf mindestens zwei oder mehr vorgewählte Bereiche, die sich an den zwei oder mehr zusammenpassenden Ecken (23) befinden, umfasst,
Bereitstellen des Fensters (12) mit einer Kante,
Platzieren des Fensters (12) auf dem Rahmen (16), so dass sich ein Teil einer Innenfläche des Fensters (12) über den Flansch (21) erstreckt und die Kante mit der äußeren Umfangsfläche (18) des Rahmens (16) fluchtet, wobei die Raupe aus einkomponentigem härtbarem Klebstoff (30) und dem Verstärkungsmittel zwischen einer Innenfläche des Fensters (12) und dem Flansch (21) des Rahmens (16) positioniert ist.

2. Verfahren zum Verkleben eines Fensters (12) mit einem Rahmen (16) mit den Schritten:
Bereitstellen eines Rahmens (16) für das Fenster (12) mit einer inneren Umfangsfläche (20), die eine Öffnung in dem Rahmen (16) definiert, und einer äußeren Umfangsfläche (18) des Rahmens (20), wobei die innere Umfangsfläche (20) und die äußere Umfangsfläche (18) zwei oder mehr zusammenpassende Ecken (23) aufweisen,
Bereitstellung eines einkomponentigen härtbaren Klebstoffs (30) und eines Verstärkungsmittels,
Mischen des einkomponentigen härtbaren Klebstoffs (30) mit dem Verstärkungsmittel:
Auftragen einer Raupe des einkomponentigen härtbaren Klebstoffs (30) und des Verstärkungsmittels zumindest teilweise um die Öffnung in dem Rahmen (16) auf einem Flansch (21) zwischen der inneren Umfangsfläche (20) und der äußeren Umfangsfläche (18), wobei das Auftragen der Raupe des einkomponentigen härtbaren Klebstoffs (30) und des Verstärkungsmittels ferner das Auftragen auf mindestens zwei oder mehr vorgewählte Bereiche umfasst, die sich an den zwei oder mehr zusammenpassenden Ecken (23) befinden, um das Fenster (12) bei der Montage des Fensters (12) in dem Rahmen (16) sicher an seinem Platz zu halten,
Bereitstellen des Fensters (12) mit einer Kante,
Platzieren des Fensters (12) auf dem Rahmen (16), so dass sich ein Teil einer Innenfläche des Fensters (12) über den Flansch (21) erstreckt und die Kante mit der äußeren Umfangsfläche (18) des Rahmens (16) fluchtet, wobei die Raupe aus einkomponentigem härtbarem Klebstoff (30) und dem Verstärkungsmittel zwischen einer Innenfläche des Fensters (12) und dem Flansch (21) des Rahmens (16) positioniert ist.

3. Verfahren nach Anspruch 1 oder 2, das ferner das Montieren des Fensters (12) in den Rahmen (16) umfasst, wobei das Fenster (12) während des Aushärtens des einkomponentigen härtbaren Klebstoffs (30) an den vorgewählten Bereichen im Rahmen (16) gehalten wird.

4. Verfahren nach Anspruch 3, wobei die Raupe aus einkomponentigem härtbarem Klebstoff (30) auf den gesamten Flansch (21) des Rahmens (16) oder den Teil der Innenfläche des Fensters (12), der den Flansch (21) des Rahmens (16) überlappt, aufgetragen wird.

5. Verfahren nach Anspruch 4, wobei das Verstärkungsmittel auf mindestens zwei Bereiche um den Flansch (21) des Rahmens (16) oder den Teil der Innenfläche des Fensters (12), der den Flansch (21) des Rahmens (16) überlappt, aufgebracht wird.

6. Verfahren nach Anspruch 5, wobei das Fenster (12) eine Windschutzscheibe ist.

7. Verfahren nach Anspruch 5, wobei der einkomponentige härtbare Klebstoff (30) ein wasserhärtbarer Klebstoff ist.

8. Verfahren nach Anspruch 3 mit ferner dem lokale Anwenden einer Infrarot-Wärmequelle auf die zwei oder mehr zusammenpassenden Ecken (23), um den Aushärtungsprozess zu beschleunigen.

9. Verfahren nach Anspruch 1 oder 2, wobei die zwei oder mehr Ecken (23) zwei obere Ecken (26, 26'), die sich an der Oberseite der Umfangsfläche des Rahmens (16) befinden, und zwei untere Ecken (22, 22'), die sich an der Unterseite der Umfangsfläche des Rahmens (16) befinden, umfassen, wobei die zwei oder mehr vorgewählten Bereiche die zwei unteren Ecken (22, 22') sind.

10. Verfahren nach Anspruch 1 oder 2, wobei der härtbare Klebstoff (30) ein Isocyanat-Urethan-Klebstoff ist und das Verstärkungsmittel ein Polyesterpolyolverstärker ist.

11. Verfahren nach Anspruch 1 oder 2, wobei das Verstärkungsmittel im Wesentlichen aus einem besteht, das aus der Gruppe ausgewählt ist, die Polyesterpolyolverstärker, Dibutylzinndilaurat, Mecaptide einschließlich eines wasserlöslichen, zinnorganischen Katalysators, wasserlösliche Katalysatoren auf Wismutbasis und Katalysatoren auf Zinkbasis umfasst.

## Revendications

1. Procédé pour faire adhérer une fenêtre (12) à un cadre (16), comprenant les étapes consistant à :
fournir un cadre (16) pour la fenêtre (12) ayant une surface périphérique intérieure (20) définissant une ouverture dans le cadre (16) et une surface périphérique extérieure (18) du cadre (16), dans lequel la surface périphérique intérieure (20) et la surface périphérique extérieure (18) ont deux ou plusieurs coins appariés (23) ;
fournir un adhésif durcissable monocomposant ;
appliquer un boudin d'adhésif durcissable monocomposant (30) au moins partiellement autour de l'ouverture dans le cadre (16) sur une bride (21) entre la surface périphérique intérieure (20) et la surface périphérique extérieure (18), dans lequel l'étape consistant à appliquer le boudin d'adhésif durcissable monocomposant (30) inclut en outre d'appliquer sur au moins deux ou plusieurs zones présélectionnées situées au niveau des deux ou plusieurs coins appariés (23) un agent accélérateur qui est ajouté à l'adhésif durcissable monocomposant (30) pour maintenir en place la fenêtre (12) de manière fixe lors d'un assemblage de la fenêtre (12) dans le cadre (16) ;
fournir la fenêtre (12) ayant un bord ;
placer la fenêtre (12) sur le cadre (16) de sorte qu'une portion d'une surface interne de la fenêtre (12) s'étend au-dessus de la bride (21) et que le bord est aligné avec la surface périphérique extérieure (18) du cadre (16), dans lequel le boudin constitué de l'adhésif durcissable monocomposant (30) et de l'agent accélérateur est positionné entre une surface interne de la fenêtre (12) et la bride (21) du cadre (16).

2. Procédé pour faire adhérer une fenêtre (12) à un cadre (16), comprenant les étapes consistant à :
fournir un cadre (16) pour la fenêtre (12) ayant une surface périphérique intérieure (20) définissant une ouverture dans le cadre (16) et une surface périphérique extérieure (18) du cadre (16), dans lequel la surface périphérique intérieure (20) et la surface périphérique extérieure (18) ont deux ou plusieurs coins appariés (23) ;
fournir un adhésif durcissable monocomposant (30) et un agent accélérateur ;
mélanger l'adhésif durcissable monocomposant (30) avec l'agent accélérateur ;
appliquer un boudin constitué de l'adhésif durcissable monocomposant (30) et de l'agent accélérateur au moins partiellement autour de l'ouverture dans le cadre (16) sur une bride (21) entre la surface périphérique intérieure (20) et la surface périphérique extérieure (18), dans lequel l'étape consistant à appliquer le boudin d'adhésif durcissable monocomposant (30) et l'agent accélérateur inclut en outre l'application sur au moins deux ou plusieurs zones présélectionnées situées au niveau des deux ou plusieurs coins appariés (23) pour maintenir en place la fenêtre (12) de manière fixe lors d'un assemblage de la fenêtre (12) dans le cadre (16) ;
fournir la fenêtre (12) ayant un bord ;
placer la fenêtre (12) sur le cadre (16) de sorte qu'une portion d'une surface interne de la fenêtre (12) s'étend au-dessus de la bride (21) et que le bord est aligné avec la surface périphérique extérieure (18) du cadre (16), dans lequel le boudin constitué de l'adhésif durcissable monocomposant (30) et de l'agent accélérateur est positionné entre une surface interne de la fenêtre (12) et la bride (21) du cadre (16).

3. Procédé selon la revendication 1 ou 2, comprenant en outre l'étape consistant à assembler la fenêtre (12) dans le cadre (16), et la fenêtre (12) est maintenue dans le cadre (16) au niveau des zones présélectionnées pendant le durcissement de l'adhésif durcissable monocomposant (30).

4. Procédé selon la revendication 3, dans lequel le boudin d'adhésif durcissable monocomposant (30) est appliqué sur la bride (21) entière du cadre (16) ou sur la portion de la surface interne de la fenêtre (12) qui chevauche la bride (21) du cadre (16).

5. Procédé selon la revendication 4, dans lequel l'agent accélérateur est appliqué sur au moins deux zones autour de la bride (21) du cadre (16) ou sur la portion de la surface interne de la fenêtre (12) qui chevauche la bride (21) du cadre (16).

6. Procédé selon la revendication 5, dans lequel la fenêtre (12) est un pare-brise.

7. Procédé selon la revendication 5, dans lequel l'adhésif durcissable monocomposant (30) est un adhésif durcissable à l'eau.

8. Procédé selon la revendication 3, comprenant en outre l'étape consistant à appliquer localement une source de chaleur à infrarouge sur les deux ou plusieurs coins appariés (23) pour accélérer le processus de durcissement.

9. Procédé selon la revendication 1 ou 2, dans lequel les deux ou plusieurs coins (23) incluent deux coins supérieurs (26, 26') situés au niveau du sommet de la surface périphérique du cadre (16) et deux coins inférieurs (22, 22') situés au niveau du bas de la surface périphérique du cadre (16), dans lequel les deux ou plusieurs zones présélectionnées sont les deux coins inférieurs (22, 22').

10. Procédé selon la revendication 1 ou 2, dans lequel l'adhésif durcissable (30) est un adhésif isocyanate uréthane et l'agent accélérateur est un accélérateur polyester polyol.

11. Procédé selon la revendication 1 ou 2, dans lequel l'agent accélérateur est essentiellement constitué d'un élément sélectionné parmi le groupe comprenant :
accélérateur polyester polyol, dilaurate de dibutylétain, mécaptides incluant un catalyseur organostannique hydrosoluble, des catalyseurs à base de bismuth hydrosoluble et des catalyseurs à base de zinc.
